# EUROPÄISCHE PATENTSCHRIFT

(11) **EP 3 402 047 B1**
(45) Veröffentlichungstag und Bekanntmachung des Hinweises auf die Patenterteilung: **05.04.2023**
(21) Anmeldenummer: 18168825.0
(22) Anmeldetag: 03.02.2016
(51) Int. Cl.: H02K 3/04, H01R 4/24

(54) **SCHNEID-KLEMM-KONTAKT**
INSULATION DISPLACMENT CONTACT
CONTACT PÉNÉTRANT L'ISOLATION

(30) Priorität: 03.02.2015 DE 102015001214
(43) Veröffentlichungstag der Anmeldung: 14.11.2018
(62) Teilanmeldung aus: 16705443.6
(73) Patentinhaber: Brose Fahrzeugteile SE & Co. Kommanditgesellschaft, Würzburg, 97076 Würzburg (DE)
(72) Erfinder: BEETZ, Stefan, 19089 Barnin (DE); BERKOUK, Maurad, 29217 Le Conquet (FR); CORDRIE, Sylvain, 97230 Estenfeld (DE); LABAT, Sebastien, 97523 Schwanfeld (DE); SIMPSON, Stanley, Oxford, Michigan 48371 (US); JÄGER, Dominik, 98587 Bermbach (DE)
(74) Vertreter: FDST Patentanwälte

(56) Entgegenhaltungen:
- EP-A1- 2 712 029
- DE-A1- 10 152 006
- DE-A1-102008 033 905
- US-A- 6 123 566

## Beschreibung

Die Erfindung betrifft einen Schneid-Klemmkontakt für Drähte, insbesondere für die Spulenenden einer Motor- oder Statorwicklung eines Elektromotors, gemäß dem Oberbegriff des Anspruchs 1. Ein derartiger Schenid-Klemmkontakt ist aus der DE 101 52 006 B4 bekannt.

Ein Schneid-Klemm-Kontakt ist üblicherweise ein Verbindungselement, um ein Stecker-Element mit einem Draht, beispielswiese auch einen mit einer Isolierung versehenen Draht, zu verbinden. Ein derartiger Schneid-Klemm-Kontakt ist üblicherweise für die Schneid-Klemm-Kontaktierung eines einzelnen Drahtes vorgesehen und ausgebildet.

Ein bürstenloser Elektromotor weist einen Stator mit einer Anzahl von beispielsweise sternförmig angeordneten Statorzähnen auf, welche eine elektrische Statorwicklung (Motorwicklung) in Form einzelner Statorspulen tragen, die ihrerseits aus einem Isolierdraht gewickelt sind. Die Spulen sind mit deren Spulenenden einzelnen Strängen zugeordnet und untereinander in einer vorbestimmten Weise über Verbindungsleiter einer Schalteinheit verschaltet.

Im Falle eines bürstenlosen Elektromotors als dreiphasige Drehstrommaschine weist der Stator drei Stränge und damit zumindest drei Verbindungsleiter auf, die jeweils phasenversetzt mit elektrischem Strom beaufschlagt werden, um ein magnetisches Drehfeld zu erzeugen, in dem ein üblicherweise mit Permanentmagneten versehener Rotor oder Läufer rotiert. Die Verbindungsleiter werden zur Ansteuerung des Elektromotors an eine Motorelektronik geführt. Die Spulen der Statorwicklung werden mittels der Verbindungsleiter in bestimmter Weise miteinander verschaltet. Die Art der Verschaltung ist durch das Wickelschema der Statorwicklung bestimmt, wobei als Wickelschema eine Sternschaltung oder eine Dreiecksschaltung der Spulen üblich ist.

Bei einem solchen Elektromotor kann eine Schalteinheit mit einer Anzahl von Kontaktdrähten und mit einem ringförmigen Rahmenteil mit einer Anzahl von geschlitzten Stecktaschen vorgesehen sein. Dabei sind die Kontaktdrähte zu einem Verschaltungsring für die Spulenenden einer Statorwicklung angeordnet. Die Drahtenden der vorzugsweis mit einer isolierenden Ummantelung (Isolierung) versehenen Kontaktdrähte (Kupferdrähte) können mit Schneid-Klemm-Kontakten verbunden sein, d. h. miteinander elektrisch leitend kontaktiert. Der oder jeder Schneid-Klemm-Kontakt weist zwei unter Bildung eines Schneid-Klemm-Schlitzes mit freiendseitiger Schlitzöffnung zueinander beabstandete Schneid-Klemm-Schenkel für ein einzelnes Drahtende auf, wobei die Schneid-Klemm-Kontakte im Montagezustand in Stecktaschen des Rahmenteil der Schalteinheit einsitzen können. Die jeweilige Stecktasche des Rahmenteils kann einen mit dem Schneid-KlemmSchlitz des in diese Stecktasche gesteckten Schneid-Klemm-Kontaktes fluchtenden Schlitz aufweisen.

Der Erfindung liegt daher die Aufgabe zugrunde, einen besonders geeigneten Schneid-Klemm-Kontakt anzugeben. Der Schneid-Klemm-Kontakt soll insbesondere für die Draht- oder Spulenenden einer Statorwicklung eines Elektromotors geeignet sein.

Diese Aufgabe wird erfindungsgemäß mit den Merkmalen des Anspruchs 1 gelöst. Vorteilhafte Ausgestaltungen und Weiterbildungen sind Gegenstand der Unteransprüche.

Der erfindungsgemäße Schneid-Klemm-Kontakt ist zur Verbindung von zwei oder mehreren Drähten (Kupferdrähten) zu einer dauerhaften Verbindung ausgebildet. Der Schneid-Klemm-Schlitz und/oder die Schneid-Klemm-Schenkel des Schneid-Klemm-Kontaktes sind in vorteilhafter Ausgestaltung derart ausgebildet, dass die mindestens zwei in Schlitzlängsrichtung hintereinander in den Schneid-KlemmSchlitz eingeführten und dort an mindestens einer schenkelseitigen Messerkante entlanggeführten Drahtenden sicher klemmkontaktiert sind. Der Schneid-KlemmSchlitz des oder jedes Schneid-Klemm-Kontaktes weist in Schlitzlängsrichtung einen sich an eine schenkelfreiendseitige Schlitzöffnung anschließenden ersten Schlitzbereich mit einer Schneid-Klemm-Kontur und einen sich daran anschließenden, insbesondere rauten- oder rhombusförmig, aufgeweiteten zweiten Schlitzbereich auf.

Geeigneterweise weist der oder jeder Schenkel des jeweiligen Schneid-Klemm-Kontaktes schenkelaußenseitig mindestens eine erhabene Fügekontur auf.

Eine geeignete Ausgestaltung sieht zusätzlich oder alternativ vor, dass der Schneid-Klemm-Schlitz des oder jedes Schneid-Klemm-Kontaktes in einem in Schlitzlängsrichtung einer schenkelfreiendseitigen Schlitzöffnung abgewandten Schlitzendbereich eine, vorzugsweise kreisförmige, Ausnehmungskontur aufweist, die eine Sollbiegestelle (Soll-Biegestelle) für die Schneid-Klemm-Schenkel bildet. Gemäß einer zweckmäßigen Weiterbildung dieser Sollbiegestelle der Schneid-Klemm-Schenkel bildet die Ausnehmungskontur eine den Schneid-Klemm-Schlitz verengende Anlagekontur aus, an welcher das in den Schneid-Klemm-Schlitz erste eingeführte Drahtende anschlägt. Dieses Drahtende bildet dann praktisch den Anschlag für das zweite in den Schneid-Klemm-Schlitz eingeführte Drahtende.

Der Schneid-Klemm-Kontakt weist zwei Schenkel (Schneid-Klemm-Schenkel) auf. Zwischen den Schenkeln ist ein Schlitz (Schneid-Klemm-Schlitz) gebildet, der an den Schenkelfreienden offen und an den gegenüberliegenden Schenkelenden geschlossen ist. Die einander gegenüberliegenden Schenkelkanten sind derart ausgebildet, dass ein von der Schlitzöffnung her in den Schlitz eingeführter Draht (Leiter) an den nachfolgend als Messerkanten bezeichneten Schenkelkanten (umfangsseitig) an- und/oder eingeschnitten und dabei die Drahtisolierung durchtrennt wird. Die biegeelastischen Schenkel üben dabei eine federartige Klemmkraft auf den jeweiligen Draht (das jeweilige Drahtende) aus. Im Schneid-Klemm-Zustand des Drahtes bzw. Drahtendes verlaufen die Messerkanten der Schneid-Klemm-Schenkel quasi tangential zum üblicherweise etwa kreisförmigen Drahtdurchmesser.

Die Schneiden- beziehungsweise Messerkanten- und/oder die Schlitzgeometrie des Schneid-Klemm-Kontaktes ist dabei derart, dass in Schlitzlängsrichtung sowohl ein erster als auch mindestens ein zweiter Draht (Drahtende) im Schneid-Klemm- Schlitz desselben Schneid-Klemm-Kontaktes zuverlässig klemmkontaktiert wird.

Insbesondere ist dabei ein bestimmtes, vorgegebenes und/oder gewähltes Verhältnis der Schnitttiefe des Drahtes (Drahtendes) zum Drahtdurchmesser mittels der Messerkantenanordnung und/oder -kontur hergestellt. Die Geometrie beziehungsweise Messerkantenkontur und/oder Schlitzgeometrie ist dabei derart, dass zunächst ein erster Draht (Drahtende) beim Kontaktieren in den Schneid-KlemmKontakt hineingedrückt und an der Messerkante beziehungsweise den beiden den Schlitz flankierenden Messerkanten angeschnitten wird. Der Draht ist dabei normal zur Schlitzebene des Schneid-Klemm-Kontaktes orientiert. Im Bereich der Schneid-Klemm-Kanten verringert sich der Drahtdurchmesser um beispielsweise 20% bis 25% während der nachfolgend beim Kontaktieren angeschnittene Draht hinsichtlich dessen Drahtdurchmessers im Bereich der Schneidkanten um einen geringeren Betrag von beispielsweise 10% bis < 20% angeschnitten wird. Der oder jeder Draht ist dabei normal zur Schlitzebene des Schneid-Klemm-Kontaktes orientiert.

Die Schlitzgeometrie ist derart, dass ausgehend von der Schlitzöffnung sich an diese zunächst ein vergleichsweise kurzer, erster Schneidbereich und an diesen ein erweiterter zweiter Bereich sowie an diesen wiederum ein vergleichsweise langer, dritter Schneidbereich anschließt. Der aufgeweitete Bereich ist vorteilhafterweise rautenförmig, indem in die beiden gegenüberliegenden Schenkel in diese jeweils eine etwa V-förmige Einklinkung eingebracht ist. Da der Schneid-KlemmKontakt vorzugsweise ein Stanzteil ist, ist sowohl diese Geometrie als auch eine andere, den aufgeweiteten Bereich darstellende Geometrie beziehungsweise Kontur denkbar. Im aufgeweiteten Bereich müssen die einander zugewandten Kanten der Schenkel nicht unbedingt als Messerkanten ausgeführt sein.

Vorzugsweise gegenüberliegend zu diesem aufgeweiteten Bereich sind geeigneterweise an die Schneid-Klemm-Schenkel außenseitig lokale erhabene Konturen angeformt. Zweckmäßigerweise sind zudem außenseitig entlang der Schneid-Klemm-Schenkel weitere Fügekonturen (Zapfen und/oder Nuten) angeformt bzw. stanztechnisch eingebracht.

Der aufgeweitete Bereich des Schlitzes hat den vorteilhaften Zweck und die geeignete Funktion, den zunächst (ersten) im Schlitz angeschnittenen Draht aufzunehmen, sobald der weitere (zweite) Draht in dem sich an die Einführöffnung des Schlitzes anschließenden, vergleichsweise kurzen oder schmalen Schneidbereich zwischen den Messerkanten der einander gegenüber angeordneten Schenkel gelangt. Da sich in dieser Position der erste Draht in dem aufgeweiteten Bereich des Schlitzes befindet, wirken in dem zur Schlitzöffnung hin vorgelagerten Schneidbereich die erforderlichen Schneid-Klemm-Kräfte der beiden Schenkel auf den zweiten Draht. Auf diese Weise werden nacheinander beide Drähte angeschnitten und können anschließend über den erweiterten Bereich in den sich daran anschließenden Schneid-Klemm-Bereich, der insbesondere als Klemmbereich wirksam ist, klemmkontaktierend in Schlitzlängsrichtung weitergeführt beziehungsweise weitergepresst werden.

Gemäß einer weiteren vorteilhaften Ausgestaltung wirkt der Schneid-KlemmKontakt mit einer an dessen Außenkontur, insbesondere im Bereich dessen Schenkeln, angepassten Aufnahmetasche zusammen. Diese ist geeigneterweise ebenfalls geschlitzt, wobei einander gegenüberliegende taschenseitige Schlitze im Montagezustand des Schneid-Klemm-Kontaktes mit dessen Schlitz fluchten. Die außenseitig an den Schneid-Klemm-Kontakt angeformten Fügekonturen ermöglichen einen festen kraft- und/oder formschlüssigen Sitz des Schneid-Klemm-Kontaktes innerhalb der Füge- oder Aufnahmetasche, so dass vorzugsweise über die Schenkel eine zuverlässige und/oder zusätzliche Kraft auf den oder jeden kontaktierten Draht ausgeübt wird. In dieser Steck- oder Aufnahmetasche können in deren Schlitzbereichen die zu kontaktierenden Drähte bereits eingelegt sein, wenn der Schneid-Klemm-Kontakt in diese Fügetasche des zusätzlichen Teils eingepresst wird. Alternativ kann auch der mit den beiden Drähten bereits schneid-klemm-kontaktierte Kontakt anschließend in die Tasche eingesteckt werden.

Vorteilhafterweise ist die oder jede Fügetasche Bestandteil eines (ringförmigen) Rahmenteils einer Schalteinheit zur schaltungstechnisch vorgegebenen Kontaktierung von Kontaktdrähten, Spulenenden und/oder Phasenanschlüssen für die Stator- beziehungsweise Motorwicklung eines Elektromotors, insbesondere eines Kühlerlüftermotors eines Kraftfahrzeugs.

Hinsichtlich der Schalteinheit für einen, vorzugsweise bürstenlosen, Elektromotor, mit einer Anzahl von Kontaktdrähten zur Verschaltung von Spulen einer Statoroder Motorwicklung bilden die Schneid-Klemm-Kontaktes geeigneterweise eine entsprechende Anzahl von Phasenanschlüssen, beispielsweise drei Phasenanschlüsse bei einem dreiphasigen Elektromotor bzw. einer dreiphasigen Motorwicklung. Dabei können die mittels der Schneid-Klemm-Kontakte hergestellten Verbindungen der Drahtenden der vorzugsweise zu einem Verschaltungsring angeordneten Kontaktdrähte auch für die Phasenanschlüsse einer mehrphasigen Motoroder Statorwicklung eingesetzt oder verwendet werden.

Zur Kontaktierung von phasenseitigen Anschlüssen sind beispielsweise drei derartige Schneid-Klemm-Kontakte mit diesen zugeordneten Füge- oder Stecktaschen im Rahmenteil der Schalteinheit (Verschaltungs- oder Terminationsring) vorgesehen und beispielsweise zueinander äquidistant angeordnet. Das vorzugsweise kreisringförmige Rahmenteil nimmt zudem geeigneterweise zur Verschaltung der Spulen der Statorwicklung vorgesehene Kontaktdrähte auf, die mit den jeweiligen Spulenenden und/oder Phasenanschlüssen kontaktiert werden.

Nachfolgend werden Ausführungsbeispiele der Erfindung anhand einer Zeichnung näher erläutert. Darin zeigen:
- Fig. 1a und 1b: einen Schneid-Klemm-Kontakt mit einem von zwei Schneid-Klemm-Schenkeln flankierten Schneid-Klemm-Schlitz ohne bzw. mit schenkelaußenseitig einer Schlitzöffnung angeordneter Fügekontur,
- Fig. 2: einen der Schneid-Klemm-Schenkel eines Schneid-Klemm-Kontakts mit einer eine Soll-Biegestelle herstellenden, kreisförmigen Ausnehmung im Schenkel-Übergangsbereich,
- Fig. 3: in perspektivischer Darstellung einen Verschaltungsring mit mehreren in Kreisform angeordneten Kontaktdrähten und drei äquidistant angeordneten Schneid-Klemm-Kontakten,
- Fig. 4: in einer Darstellung gemäß Figur 3 eine Schalteinheit mit einem derartigen Verschaltungsring und mit einem ringförmigen Rahmenteil,
- Fig. 5: die Schalteinheit gemäß Figur 4 ohne Verschaltungsring und mit Blick auf eine Stecktasche ohne eingesetzten Schneid-Klem m-Kontakt,
- Fig. 6: in einer Darstellung gemäß Fig. 5 eine Ausführungsform der Schalteinheit mit geschlossenen Spulenkassetten
- Fig. 7: in perspektivischer Darstellung einen Stator mit aufgesetzter Schalteinheit,
- Fig. 8: in perspektivischer Darstellung den Stator mit aufgesetzter Schalteinheit und den Rotor sowie die mit den Schneid-Klemm-Kontakten verbundene Elektronik (Leiterplatte) eines Elektromotors, und
- Fig. 9: in perspektivischer Darstellung den Elektromotor als Kühlerlüftermotor für ein Kraftfahrzeugs inklusive Schalteinheit und Elektronik.

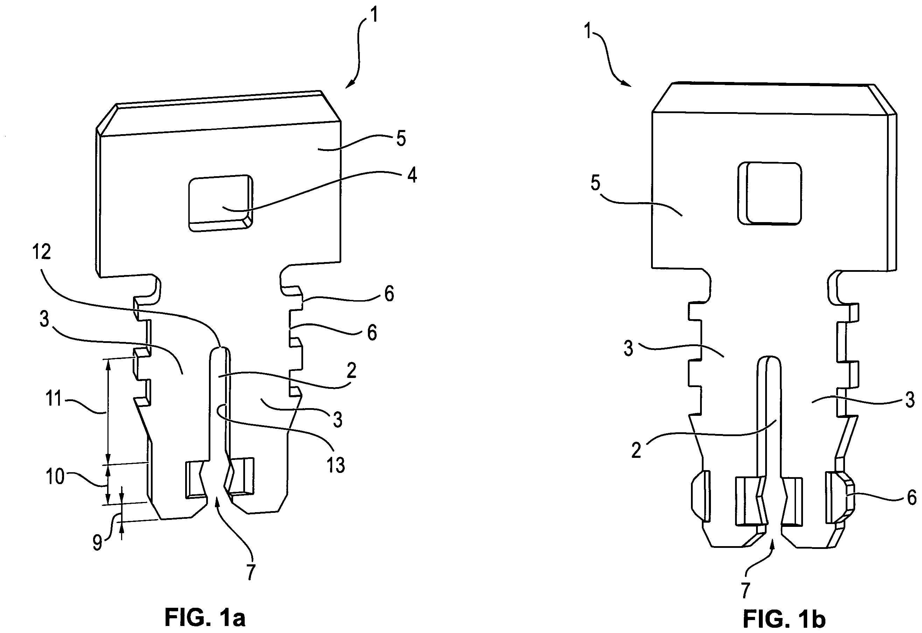

Die Figuren 1a und 1b zeigen einen nachfolgend auch einfach als Kontakt bezeichneten Schneid-Klemm-Kontakt 1 mit einem nachfolgend einfach als Schlitz 2 bezeichneten Schneid-Klemm-Schlitz, der von zwei nachfolgend einfach als Schenkel 3 des bezeichneten Schneid-Klemm-Schenkeln des Schneid-Klemm-Kontaktes 1 flankiert ist, sich also zwischen diesen beiden Schenkeln 3 befindet bzw. gebildet ist. Der Kontakt 1 ist vorzugsweis ein Stanzteil. Die Schenkel 3 des Kontaktes 1 gehen in einen vorzugsweise mit einer Durchgangsöffnung (Durchgangsbohrung) 4 versehenen Kontaktkopf 5 über. Außenseitig der Schenkel 3 sind an diese Fügekonturen 6 (Nuten, Zapfen) angeformt beziehungsweise eingestanzt.

Der Schlitz 2 weist im Bereich der Schenkelfreienden der Schenkel 3 eine Schlitzöffnung 7 auf. An diesen schließt sich in Schlitzlängsrichtung 8 eine erste, vergleichsweise kurze Schneid-Klemm-Kontur 9 an. Diese geht in Schlitzlängsrichtung 8 in einen erweiterten Bereich 10 über. Dieser ist vorzugsweise rautenförmig. An diesen Bereich 10 wiederum schließt sich ein weiterer, vergleichsweise langer Schneid-Klemm-Bereich zumindest aber ein Klemmbereich 11 an. Dieser endet an den den Schenkelfreienden gegenüberliegenden Enden, d. h. am Übergangsbereich 12 der Schenkel 3.

Aufgrund dieser Kontaktgeometrien ist eine zuverlässige Kontaktierung beziehungsweise Verbindung nicht nur eines Drahtes, sondern zweier oder mehrere Drähte ermöglicht. Diese werden aufeinanderfolgend in Schlitzlängsrichtung 8 in den Schlitz 2 eingeführt beziehungsweise eingepresst und dabei umfangsseitig (azimutal) angeschnitten. Die Schnitttiefe ist dabei größer oder gleich der Dicke einer Isolierung (isolierenden Ummantelung) des oder jedes Drahtes. Hierzu sind die einander zugewandten Schenkelkanten der Schenkel 3 im Bereich des Schlitzes 2 messerartig als Messerkanten 13 ausgeführt. Die Durchmesserreduzierung des ersten im Schlitz 2 angeschnittenen Drahtes beträgt beispielsweise etwa 22%, während die Durchmesserreduzierung des weiteren im Schlitz 2 angeschnittenen Drahtes beispielsweise etwa 16% beträgt, bezogen auf einen Kupferdraht mit einem Durchmesser von beispielsweise 1,12 mm und einer Drahtisolierung von beispielsweise 0,003 mm, also einem Gesamtdrahtdurchmesser von ca. 1,15 mm bis 1,16 mm.

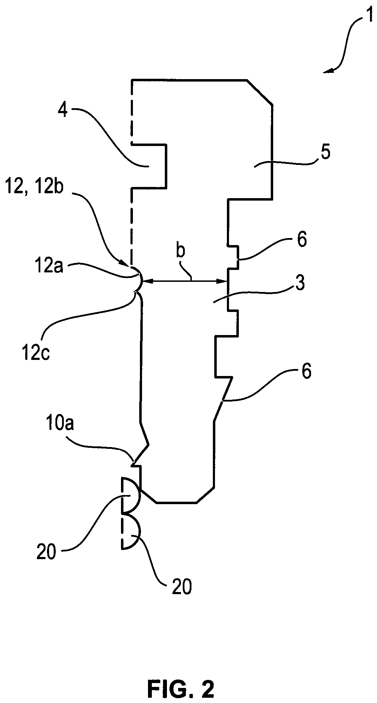

Bei der in Fig. 2 dargestellten Ausführungsform des Schneid-Klemm-Kontaktes 1, von dem lediglich der linke Schneid-Klemm-Schenkel 3 dargestellt ist, weist der rautenförmige Bereich 10 auf der der Schlitzöffnung 7 zugewandten Seite eine spitz zulaufende, vergleichsweise ausgeprägte Schneidkontur 10a auf. Im oder am Übergangsbereich 12 der Schenkel 3 ist eine im Ausführungsbeispiel kreisrunde Ausnehmungskontur 12a vorgesehen. Diese führt zu einer zumindest geringfügigen Verringerung der Schenkelbreite b der Schenkel 3 im Vergleich zur Schenkelbreite der Schneid-Klemmkontakte 1 gemäß den Figuren 1a und 1b ohne derartige Ausnehmungskontur im Übergangsbereich 12.

Diese Ausnehmungskontur 12a definiert eine Soll-Biegestelle 12b für die Schenkel 3, wenn diese bei Einführen der mit 20 bezeichneten Drähte oder Drahtenden in den Schneid-Klemmschlitz 2 des Kontaktes 1 nach außen ausbiegen. Die Ausnehmungskontur 12a bildet zudem eine den Schneid-Klemm-Schlitz 2 verengende Anlagekante 12c, beispielsweise in Form eines sektorförmigen Überstandes, als schlitzinterner Anschlag für die Drahtenden 20.

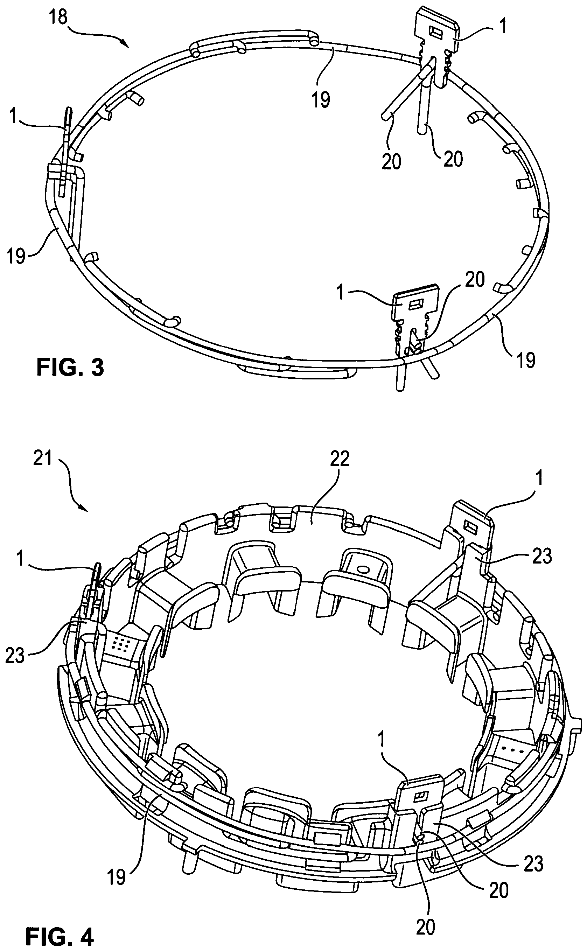

Figur 3 zeigt einen Verschaltungsring 18 mit mehreren in Kreisform angeordneten Kontaktdrähten 19 und drei äquidistant angeordneten Schneid-Klemm-Kontakten 1, die jeweils zwei Drähte beziehungsweise Drahtenden 20 schneid-klemm-kontaktieren.

Figur 4 zeigt eine Schalteinheit 21 mit einem derartigen Verschaltungsring 18. Die Schalteinheit 21 weist einen ringförmigen Rahmenkörper (Rahmenteil) 22, vorzugsweise aus Kunststoff, auf. Dieser wiederum weist im Bereich des jeweiligen Schneid-Klemm-Kontaktes 1 eine Aufnahmetasche (Steck-/Fügetasche) 23 zur Aufnahme des Schneid-Klemm-Kontaktes 1 auf.

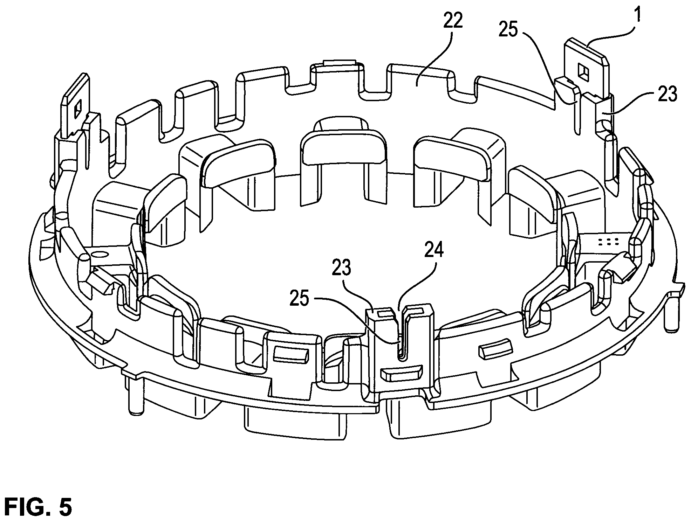

Figur 5 zeigt die Schalteinheit 21 beziehungsweise das Rahmenteil 22 gemäß Figur 4 mit zwei in die zugeordnete Stecktaschen 23 eingesetzten Schneid-Klemm-Kontakten 1, während die im Figurenvordergrund erkennbare Stecktasche 23 ohne Schneid-Klemm-Kontakt 1 erkennbar ist. Die in diese Stecktaschen 23 eingebrachten, endseitig wiederum mit einer Schlitzöffnung 24 versehenen Schlitze 25 fluchten mit dem Schlitz 2 des jeweiligen Schneid-Klemm-Kontaktes 1. Dabei befindet sich die jeweilige rahmenseitige Schlitzöffnung 24 auf der der Schlitzöffnung 7 des Schneid-Klemm-Kontaktes 1gegenüberliegenden Schlitzseite, also auf der Einführ- oder Einsteckseite der jeweiligen Stecktasche 23.

Wie in den Figuren 3 und 4 erkennbar ist, verlaufen die kontaktierten Drahtenden 20 normal zur vom Schlitz 2 aufgespannten Schlitzebene.

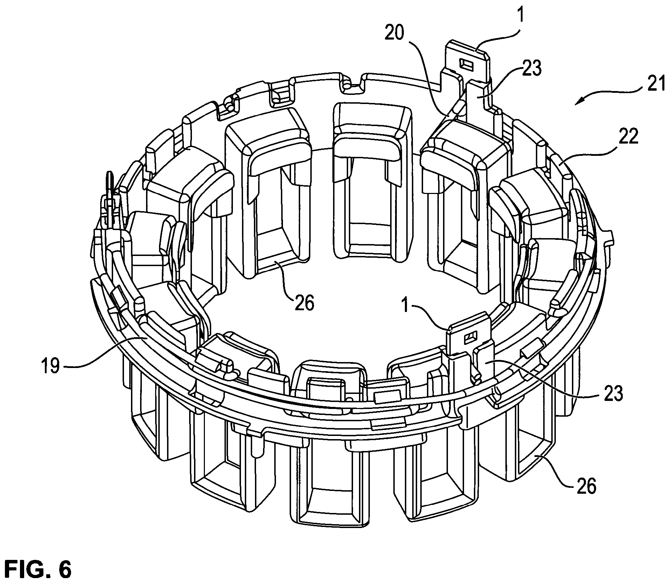

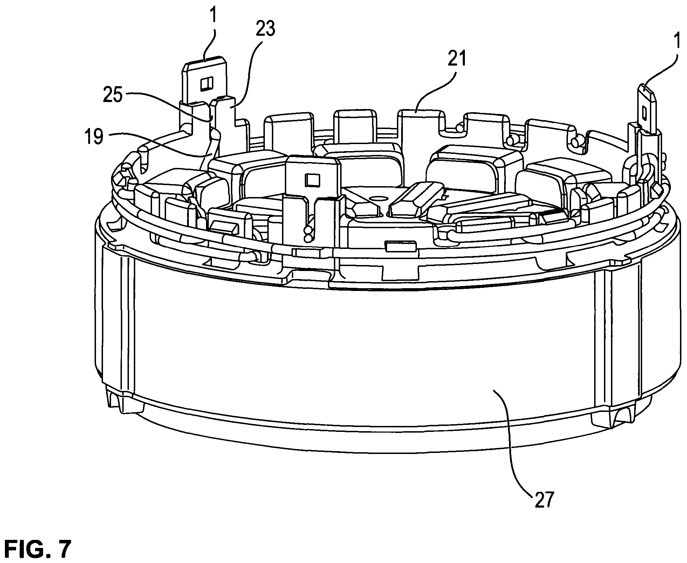

Figur 6 zeigt eine weitere Ausführungsform der Schalteinheit mit vollständigen, geschlossenen Spulenkassetten 26, die an das Rahmenteil 22 der Schalteinheit 21 angeformt sind. Diese nehmen im Montagezustand des in Figur 7 gezeigten Stators 27 eines Elektromotors 28 jeweils dessen Statorzähne auf und sind beziehungsweise werden in nicht näher dargestellter Art und Weise mit den einzelnen Spulen der Statorwicklung umwickelt.

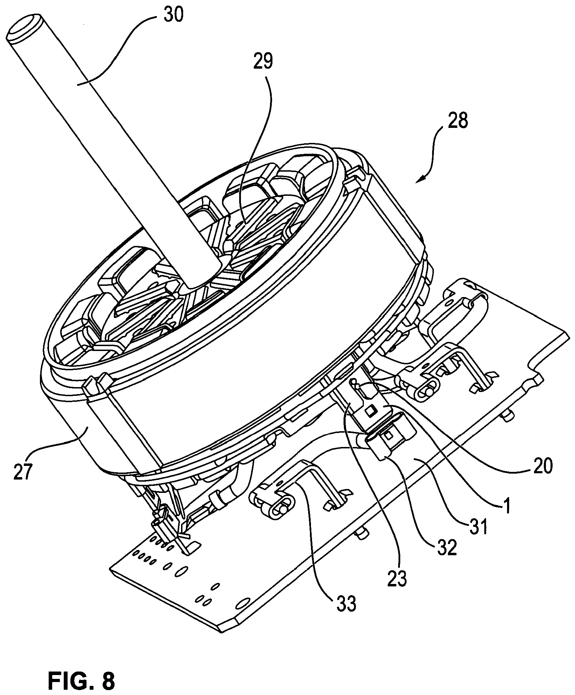

Figur 8 zeigt den mit der Schalteinheit 21 versehenen Stator 27 gemäß Figur 7 inklusive Rotor 29 und Motorachse 30 sowie inklusive Elektronik (Leiterplatte) 31 sowie deren Kontaktierung mit den Schneid-Klemm-Kontakten 1 über deren Kontaktköpfe 5. Diese sind in beispielsweise crimplaschenartige Stecktaschen 32 von beispielsweise als Stanz-Biegeteile aus Flachdraht hergestellten Kontakten (Flachkontakten) oder Kontaktabschnitten 33 eingesteckt und bilden hierbei die Phasenanschlüsse zur dreiphasigen Bestromung der Stator- bzw. Motorwicklung.

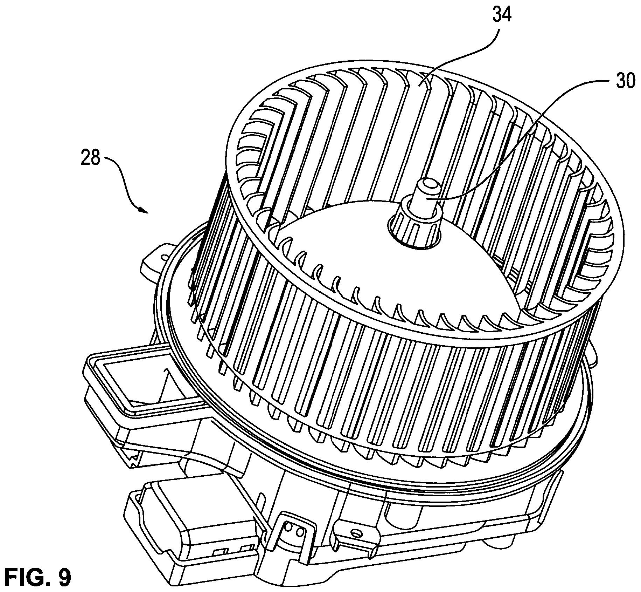

Figur 9 zeigt den montierten beziehungsweise zusammengesetzten Elektromotor 28 als Kühlerlüftermotor für ein Kraftfahrzeugs inklusive Stator 27, Schalteinheit 21 und Lüfterrad 34.

### Bezugszeichenliste

- 1: Schneid-Klemm-Kontakt
- 2: Schneid-Klemm-Schlitz
- 3: Schneid-Klemm-Schenkel
- 4: Durchgangsöffnung/-bohrung
- 5: Kontaktkopf
- 6: Fügekontur
- 7: Schlitzöffnung
- 8: Schlitzlängsrichtung
- 9: Schneid-Klemm-Kontur
- 10: Bereich
- 11: Schneid-Klemm-Bereich
- 12: Übergangsbereich
- 12a: Ausnehmungskontur
- 12b: Soll-Biegestelle
- 12c: Anlagekante/Anschlag
- 13: Messerkante

- 18: Verschaltungsring
- 19: Kontaktdraht
- 20: Draht/Drahtende
- 21: Schalteinheit
- 22: Rahmenteil/-körper
- 23: Aufnahme-/Steck-/Fügetasche
- 24: Schlitzöffnung
- 25: Schlitz
- 26: Spulenkassette
- 27: Stator
- 28: Elektromotor
- 29: Rotor
- 30: Motorachse
- 31: Elektronik/Leiterplatte
- 32: Stecktasche
- 33: Kontakt/-abschnitt
- 34: Lüfterrad

## Patentansprüche

1. Schneid-Klemm-Kontakt (1) zum Verbinden mindestens zweier Drähte oder Drahtenden (20), mit zwei unter Bildung eines Schneid-Klemm-Schlitzes (2) zueinander beabstandeten Schneid-Klemm-Schenkeln (3),
- wobei der Schneid-Klemm-Schlitz (2) und/oder die Schneid-Klemm-Schenkel (3) des Schneid-Klemm-Kontaktes (1) derart ausgebildet ist bzw. sind, dass die mindestens zwei in Schlitzlängsrichtung (8) hintereinander in den Schneid-Klemm-Schlitz (2) eingeführten und dort an mindestens einer schenkelseitigen Messerkante (13) entlanggeführten Drahtenden (20) sicher klemmkontaktiert sind,
**dadurch gekennzeichnet,**
- **dass** der Schneid-Klemm-Schlitz (2) des Schneid-Klemm-Kontaktes (1) in Schlitzlängsrichtung (8) eine schenkelfreiendseitige Schlitzöffnung (7) und eine sich an die Schlitzöffnung (7) anschließende, vergleichsweise kurze Schneid-Klemm-Kontur (9) aufweist, die in Schlitzlängsrichtung (8) in einen rautenförmig aufgeweiteten Schlitzbereich (10) übergeht, an den sich ein weiterer, vergleichsweise langer Schneid-Klemm- oder Klemm-Bereich (11) anschließt,
- **dass** der aufgeweitete Schlitzbereich (10) auf der der Schlitzöffnung (7) zugewandten Seite eine spitz zulaufende, vergleichsweise ausgeprägte Schneidkontur (10a) aufweist, und
- **dass** der aufgeweitete Schlitzbereich (10) dazu vorgesehen und eingerichtet ist, dass zunächst im Schneid-Klemm-Schlitz (2) angeschnittene erste Drahtende (20) aufzunehmen, sobald das zweite Drahtende (20) in den sich an die Schlitzöffnung (7) anschließenden ersten Schlitzbereich zwischen die Messerkanten der Schneid-Klemm-Kontur (9) der einander gegenüber angeordneten Schneid-Klemm-Schenkel (3) gelangt.

2. Schneid-Klemm-Kontakt (1) nach Anspruch 1, wobei der Schneid-Klemm-Schlitz (2) des Schneid-Klemm-Kontaktes (1) in einem in Schlitzlängsrichtung (8) der schenkelfreiendseitigen Schlitzöffnung (7) abgewandten Schlitzendbereich (11) eine Ausnehmungskontur (12a) aufweist, die eine Sollbiegestelle für die Schneid-Klemm-Schenkel (3) bildet.

3. Schneid-Klemm-Kontakt (1) nach Anspruch 2, wobei die Ausnehmungskontur (12a) kreisförmige ist.

4. Schneid-Klemm-Kontakt (1) nach Anspruch 2 oder 3, wobei die als Sollbiegestelle dienende Ausnehmungskontur (12a) eine den Schneid-KlemmSchlitz (2) verengende Anlagekontur (12c) als Anschlag für das oder jedes Drahtende (20) ausbildet.

5. Schneid-Klemm-Kontakt (1) nach einem der Ansprüche 1 bis 4, wobei der oder jeder Schenkel (3) des jeweiligen Schneid-Klemm-Kontaktes (1) schenkelaußenseitig mindestens eine erhabene Fügekontur (6) aufweist.

## Claims

1. Insulation displacement contact (1) for connecting at least two wires or wire ends (20), having two insulation displacement limbs (3) spaced apart to form an insulation displacement slot (2),
- the insulation displacement slot (2) and/or the insulation displacement limbs (3) of the insulation displacement contact (1) being designed in such a way that the at least two wire ends (20), which are introduced one behind the other in the longitudinal direction (8) of the slot into the insulation displacement slot (2) and are guided there along at least one blade edge (13) on the limb side, are securely clamp-contacted,
**characterized in**
- **that** the insulation displacement slot (2) of the insulation displacement contact (1) has, in the longitudinal direction (8) of the slot, a slot opening (7) on the limb-free end side and a comparatively short insulation displacement contour (9), which adjoins the slot opening (7) and merges, in the longitudinal direction (8) of the slot, into a slot region (10), which is widened in the form of a diamond and is adjoined by a further comparatively long insulation displacement or clamping region (11),
- **that** the widened slot region (10) has, on the side facing the slot opening (7), a pointed, comparatively pronounced cutting contour (10a), and
- **that** the widened slot region(10) is provided and arranged to receive the first wire end (20) initially cut in the insulation displacement slot (2) as soon as the second wire end (20) enters the first slot region adjoining the slot opening (7) between the knife edges of the insulation displacement contour (9) of the insulation displacement limbs (3) arranged opposite each other.

2. Insulation displacement contact (1) according to claim 1, wherein the insulation displacement slot (2) of the insulation displacement contact (1) has a recess contour (12a) in a slot end region (11) facing away from the slot opening (7) on the limb-free end side in the longitudinal direction (8) of the slot, which contour forms a predetermined bending point for the insulation displacement limbs (3).

3. Insulation displacement contact (1) according to claim 2, wherein the recess contour (12a) is circular.

4. Insulation displacement contact (1) according to claim 2 or 3, wherein the recess contour (12a) serving as a predetermined bending point forms a contact contour (12c) narrowing the insulation displacement slot (2) as a stop for the or each wire end (20).

5. Insulation displacement contact (1) according to one of claims 1 to 4, wherein the or each limb (3) of the respective insulation displacement contact (1) has at least one raised joining contour (6) on the outside of the limb.

## Revendications

1. Contact autodénudant (1) pour la connexion d'au moins deux fils ou extrémités de fils (20), avec deux branches autodénudantes (3) espacées l'une de l'autre pour former une fente autodénudante (2),
- la fente autodénudante (2) et/ou les branches de déplacement d'isolant (3) du contact à déplacement d'isolant (1) étant conçues de telle sorte que les au moins deux extrémités de fil (20), qui sont introduites l'une derrière l'autre dans la direction longitudinale (8) de la fente dans la fente autodénudante (2) et y sont guidées le long d'au moins une arête de coupe (13) du côté de la branche, sont solidement serrées en contact,
**caractérisé en ce**
- **que** la fente autodénudante (2) du contact autodénudant (1) comprend, dans la direction longitudinale (8) de la fente, une ouverture de fente (7) du côté de l'extrémité sans branche et un contour autodénudant (9) relativement court, qui se raccorde à l'ouverture de fente (7) et se transforme, dans la direction longitudinale (8) de la fente, en une zone de fente (10) élargie en forme de diamant, à laquelle se raccorde une autre zone autodénudante ou de serrage (11) relativement longue,
- **que** la zone de fente élargie (10) comprend, sur le côté tourné vers l'ouverture de la fente (7), un contour de coupe pointu, comparativement prononcé (10a), et
- **que** la zone de fente élargie (10) est prévue et disposée pour recevoir la première extrémité de fil (20) initialement coupée dans la fente autodénudante (2) dès que la deuxième extrémité de fil (20) pénètre dans la première zone de fente contiguë à l'ouverture de fente (7) entre les arrêtes de coupe du contour autodénudant (9) des branches de déplacement d'isolant (3) disposés en face l'un de l'autre.

2. Contact autodénudant (1) selon la revendication 1, dans lequel la fente autodénudante (2) du contact autodénudant (1) comprend, dans une zone d'extrémité de fente (11) opposée à l'ouverture de fente (7) du côté de l'extrémité libre des branches, dans la direction longitudinale (8) de la fente, un contour d'évidement (12a), qui forme un point de flexion prédéterminé pour les branches autodénudantes (3).

3. Contact de déplacement d'isolant (1) selon la revendication 2, dans lequel le contour de l'évidement (12a) est circulaire.

4. Contact autodénudant (1) selon la revendication 2 ou 3, dans lequel le contour de l'évidement (12a) servant de point de flexion prédéterminé forme un contour de contact (12c) rétrécissant la fente autodénudante (2) en tant que butée pour la ou chaque extrémité de fil (20).

5. Contact autodénudant (1) selon l'une des revendications 1 à 4, dans lequel la ou chaque branche (3) du contact autodénudant (1) respectif comprend au moins un contour de raccordement (6) en relief sur la face extérieure de la branche.
